# FASCICULE DE BREVET EUROPEEN

(11) **EP 1 759 962 B1**
(45) Date de publication et mention de la délivrance du brevet: **18.02.2009**
(21) Numéro de dépôt: 06291396.7
(22) Date de dépôt: 04.09.2006
(51) Int. Cl.: B62D 25/20

(54) **Ensemble d'une caisse en blanc de véhicule automobile et d'un plancher arrière**
Aufbau einer Rohbaukarosserie für ein Kraftfahrzeug und hinterer Bodenplatte
Assembly of a body-in-white of a motor vehicle and a rear floor

(30) Priorité: 02.09.2005 FR 0509016
(43) Date de publication de la demande: 07.03.2007
(73) Titulaire: Compagnie Plastic Omnium, 69007 Lyon (FR)
(72) Inventeur: Andre, Gerald, 01500 Amberieu en Bugey (FR); Delavalle, Dominique, 01160 Pont d'Ain (FR); Fillon, Jérôme, 69003 Lyon (FR)
(74) Mandataire: Remy, Vincent Noel Paul

(56) Documents cités:
- WO-A-03/022661
- WO-A2-01/72569
- DE-A1- 2 610 299
- DE-A1- 19 722 139
- FR-A- 2 866 623

## Description

La présente invention concerne un plancher arrière de véhicule automobile et un lot de deux tels planchers.

On pourrait envisager d'utiliser une caisse en blanc comprenant un plancher avant et un plancher arrière, ce dernier étant rapporté sur la caisse en blanc dans le prolongement du plancher avant.

Une caisse en blanc avec plancher rapporté présente de nombreux avantages.

En effet, au cours de la fabrication du véhicule automobile, lors de l'étape de traitement de surface (au cours de laquelle la caisse est nettoyée puis immergée dans différents bains), la surface d'une telle caisse en blanc à traiter est réduite. Cela permet donc de réduire la quantité de produit à utiliser, et, ainsi, de diminuer les coûts liés à cette étape de traitement de manière significative, par exemple lors des sous-étapes de cataphorèse ou de blaxonnage.

De plus, lors de l'immersion de la caisse dans les bains de traitement, les ouvertures ménagées dans celle-ci permettent d'augmenter la vitesse d'évacuation du produit et, ainsi, de réaliser un gain de productivité.

En outre, une telle caisse en blanc permet également une accessibilité facilitée pour le soudage des traverses et des longerons, due à l'absence de plancher et diminution de la longueur des pinces de soudage et une isolation du plancher, et donc de l'habitacle, par rapport aux roues du véhicule, ce qui permet d'assurer un plus grand confort aux passagers.

Les véhicules automobiles d'un même modèle sont fabriqués en plusieurs versions : break, berline, coupé etc. pour lesquels le constructeur modifie la structure externe du véhicule mais utilise le plus possible de composants communs à toutes les versions, dans un objectif de réduction des coûts de fabrication.

Le châssis, partie inférieure de la caisse en blanc, sur lequel est rapporté le plancher, est un composant du véhicule invisible pour l'utilisateur et fait donc partie des éléments pouvant rester communs aux différentes versions d'un même véhicule, puisqu'il n'affecte pas le design extérieur de celui-ci.

Toutefois, il existe des variations de longueur entre les différentes versions. Chez de nombreux constructeurs, par exemple, la version break des véhicules est plus longue que les autres versions.

On connaît de la publication DE 26 10 299 une caisse en blanc comprenant plusieurs panneaux de plancher pouvant s'assembler les uns aux autres en plusieurs positions de façon à modifier l'empattement du véhicule automobile formé à l'aide de ces panneaux. Cela permet d'obtenir deux versions de la caisse en blanc, une longue et une courte. Ces panneaux de plancher appartiennent à la caisse en blanc et forment la base de celle-ci sur laquelle d'autres éléments, tels que les longerons, sont fixés.

L'invention a notamment pour but de fournir un ensemble d'un plancher et d'une caisse capable de s'adapter à différentes longueurs d'un véhicule automobile comportant plusieurs versions.

A cet effet, l'invention a pour objet un ensemble selon la revendication 1.

Un avantage de cet ensemble est d'être utilisable sur plusieurs versions d'un même véhicule, ce véhicule ayant les avantages liés à une caisse en blanc ne comportant pas de plancher arrière.

Optionnellement, le plancher arrière est réalisé au moins partiellement en matière plastique.

Optionnellement, l'extrémité avant du plancher arrière est la planche à talon.

Dans la présente description, on entend par « planche à talon » la partie du plancher qui s'étend entre les sièges avant et les sièges arrière du véhicule et qui permet aux passagers arrière de faire reposer leurs pieds.

Optionnellement, le plancher arrière s'étend sur toute la longueur de l'habitacle, l'extrémité avant du plancher arrière se chevauchant avec le tablier avant, séparant l'habitacle du compartiment moteur.

Dans un mode de réalisation particulier, le plancher arrière comporte une partie inférieure comprenant des moyens de fixation au plancher avant et une partie supérieure comprenant le dégagement destiné à accueillir la traverse de la caisse en blanc.

Optionnellement, les parties inférieures et supérieures sont espacées d'au moins deux centimètres.

Cela permet de créer des espaces pour le rangement dans l'habitacle du véhicule.

Avantageusement, la partie inférieure du plancher arrière porte des éléments fonctionnels du véhicule tels que le réservoir à essence ou le pot d'échappement.

La partie supérieure peut également comporter des moyens de fixation d'éléments fonctionnels du véhicule, tels qu'une ceinture de sécurité ou un siège arrière.

Le plancher rapporté est alors fixé avec de nombreux éléments fonctionnels sur la caisse du véhicule, ce qui permet d'économiser encore des coûts de fabrication.

Dans un mode de réalisation particulier, le plancher arrière comporte une partie inférieure de la jupe arrière de véhicule automobile.

Avantageusement, la partie inférieure du véhicule est conformée pour améliorer la résistance à l'air du véhicule automobile.

L'habillage de l'habitacle du véhicule varie également selon les versions.

Dans l'état de la technique, des tôles sont rapportées sur un plancher standard pour adapter l'habillage du véhicule à chaque version. Cependant, donner forme à ces tôles, différentes selon la version du véhicule fabriquée, demande l'utilisation de machines d'outillage d'emboutissage qui représentent un lourd investissement. Les coûts de fabrication en résultant sont élevés.

Pour remédier à cet inconvénient, l'invention a également pour objet un ensemble d'une caisse en blanc de véhicule automobile et d'un lot de deux planchers arrières selon la revendication 11.

La présente invention a également pour objet un procédé de montage selon la revendication 12.

Pour deux versions de véhicule différentes, seule la partie supérieure du plancher arrière doit être fabriquée en différents modèles. Les parties inférieures, la caisse en blanc et les autres pièces annexes sont standards. Les économies réalisées sur les coûts de fabrication sont donc encore améliorées.

L'invention sera mieux comprise à la lecture de la description qui va suivre, donnée uniquement à titre d'exemple et faite en se référant aux dessins annexés dans lesquels :
- la figure 1 est une vue de 3/4 de dessus d'une caisse en blanc et d'un plancher arrière associé selon un mode de réalisation de l'invention ;
- la figure 2 est une section longitudinale de différents modèles du plancher arrière selon ce même mode de réalisation particulier de l'invention.

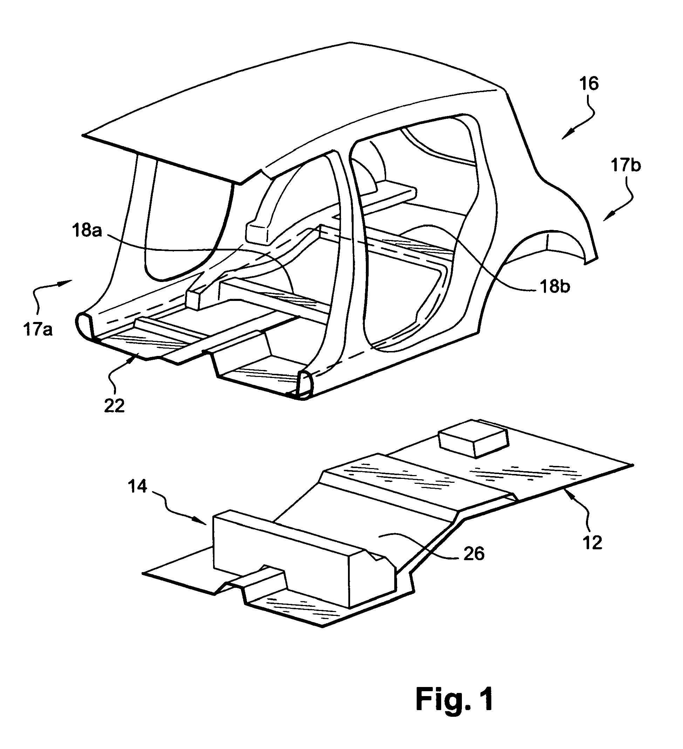

On a représenté, sur les figures, un plancher arrière 10 selon l'invention destiné à être rapporté sur une caisse en blanc de véhicule automobile. Il est constitué de deux parties : une partie inférieure 12, destiné à s'étendre entre un plancher avant et une extrémité arrière de la caisse, et une partie supérieure 14, superposée à la partie inférieure 12 et portée par celle-ci. Sur la figure 1, une caisse en blanc 16 est également représentée. La caisse en blanc 16 est du type constituée d'un bloc avant 17a, dont seule l'extrémité arrière est représentée, et d'un bloc arrière 17b. Le bloc arrière 17b de la caisse en blanc 16 comporte des traverses 18a et 18b, sur lesquelles s'adapte le plancher arrière 10. Celui-ci comprend en effet, sur sa partie supérieure 14, des dégagements 20a et 20b destinés à accueillir ces traverses 18a et 18b du bloc arrière 17b.

On voit également, sur cette figure, l'extrémité arrière du plancher avant 22, qui appartient au bloc avant 17a de la caisse en blanc 16. Le plancher arrière 10 est disposé dans le prolongement du plancher avant 22 et se fixe sous ce plancher avant 22 par sa partie inférieure 12, qui comporte des moyens de fixation (non représentés sur la figure) pouvant être des évidements destinés à accueillir des vis, s'il est rapporté par vissage ou un emplacement pour accueillir un joint, s'il est rapporté par collage.

L'extrémité avant du plancher arrière 10 est une planche à talon 24, sur laquelle les passagers arrière posent leurs pieds. C'est cette partie du plancher arrière 10 qui est fixée au plancher avant 22. Comme on le voit sur la figure, la planche à talon 24 et l'extrémité arrière du plancher avant 22 se chevauchent, une fois le plancher arrière 10 fixé à la caisse 16.

Ce plancher arrière 10, une fois rapporté sur la caisse en blanc, en général lors de l'étape d'assemblage des éléments fonctionnels du véhicule, plus particulièrement au même poste de montage que le moteur, fait donc à la fois office de fond de caisse (partie inférieure 12) et d'aménagement intérieur de l'habitacle du véhicule (partie supérieure 14).

Sa partie inférieure 12 est conformée pour améliorer la résistance à l'air sous caisse du véhicule automobile, ainsi que pour filtrer les bruits de roulements tandis que sa partie supérieure 14 est conformée pour respecter la configuration traditionnelle de l'habitacle et accueillir les éléments fonctionnels de celui-ci, comme les sièges des passagers arrières. On voit d'ailleurs, sur la figure, un dégagement 26 prévu à cet effet.

Ces éléments fonctionnels, tels que les sièges des passagers arrière ou les ceintures de sécurité, sont habituellement fixés sur la partie inférieure de l'habitacle. Le plancher arrière 10 selon l'invention remplissant ce rôle, il peut également comporter des moyens de fixation (non représentés sur la figure) de ces éléments fonctionnels.

Le plancher arrière 10, tout comme le plancher avant 22, est, dans ce mode de réalisation, au moins partiellement réalisé en matière plastique mais peut être également constitué de nombreux matériaux utilisés pour l'automobile, tels que l'aluminium, l'acier etc. On peut également signaler que l'on peut utiliser pour la partie inférieure 12 du plancher 10 une matière permettant de supporter les températures de rayonnement du pot d'échappement et de dissiper cette énergie, isolant ainsi l'habitacle de cette source de chaleur.

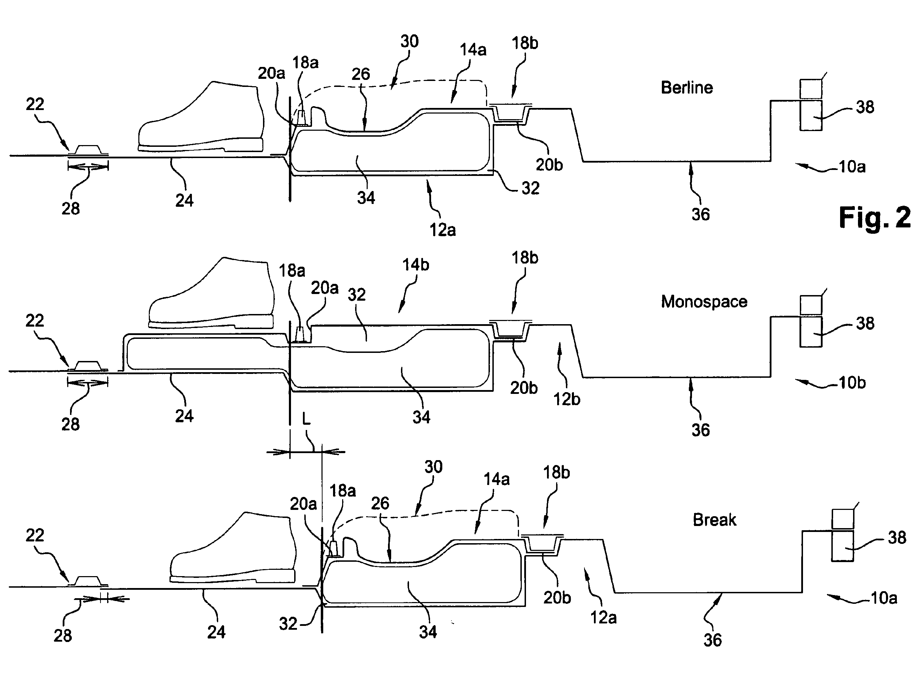

On a représenté ensuite, sur la figure 2, différentes versions de véhicule existantes : berline, monospace ou break, auxquelles le plancher arrière 10 selon l'invention s'adapte. Le plancher arrière 10 sur cette figure est réalisé selon deux modèles 10a (pour les versions berlines et break) et 10b (pour la version monospace).

Dans l'exemple représenté, les versions berline et break diffèrent uniquement en ce qu'elles présentent différentes longueurs, le break offrant plus d'espace aux passagers arrière. Une différence de longueur (L) apparaît donc traditionnellement au niveau de la planche à talon 24, ce qui est rendu possible par le recours à une caisse en blanc 16 en deux blocs 17a, 17b, ces deux blocs 17a, 17b pouvant se fixer l'un par rapport à l'autre dans au moins deux positions, de sorte que la caisse en blanc 16 peut avoir une version longue et une version courte.

Le plancher arrière 10 et, sur la figure, le modèle de plancher 10a s'adaptent sur cette caisse en blanc 16 quelle que soit la version dans laquelle elle est montée. En effet, le plancher arrière 10a comporte une planche à talon 24 dimensionnée pour se fixer au plancher avant 22 en se chevauchant avec lui sur une plage de chevauchement 28 étroite, dans la version longue (ici break), et large, dans la version courte (ici berline) de la caisse.

En outre, les versions berline et monospace diffèrent uniquement en ce qu'elles présentent un habillage intérieur de l'habitacle différent. Le plancher arrière 10 s'adapte à l'habillage de chaque version du véhicule, en étant décliné en différents modèles. Dans le mode de réalisation représenté sur la figure, 10a est le modèle dont l'habillage est adapté à la berline et 10b le modèle dont l'habillage est adapté au monospace.

Les modèles 10a et 10b du plancher arrière comportent chacun une partie inférieure 12a, 12b et une partie supérieure 14a, 14b. Les parties inférieures 12a et 12b, qui forment le fond de caisse, ne concernent pas l'habillage de l'habitacle du véhicule. Elles sont donc identiques, ce qui permet de les compter parmi les composants communs pour les différentes versions du véhicule.

Les parties supérieures 14a et 14b sont en revanche différentes car ce sont elles qui prennent en compte l'habillage de l'intérieur de l'habitacle. Dans l'exemple, pour la version berline, la partie supérieure 14a comporte un dégagement creux 26 pour accueillir le siège passager 30 (représenté en pointillés). Pour la version monospace, la partie supérieure 14b est plane, de manière à permettre une fixation des sièges au niveau du sol de l'habitacle, et se prolonge vers l'avant pour surélever la planche à talon 24 et former, côté habitacle, un plancher arrière plat.

On voit, sur la figure, que les parties supérieures 14 et inférieures 12 du plancher arrière 10 de l'exemple, quelque soit le modèle représenté, sont espacées d'au moins 2 centimètres. L'espace vide 32 entre ces deux parties permet d'accueillir le réservoir d'essence 34 du véhicule automobile. Le réservoir 34 est porté par la partie inférieure 12 du plancher arrière 10, en étant disposé sur celle-ci, ce qui permet un assemblage simplifié de cet élément qui, auparavant, était fixé par des sangles sous le plancher.

La partie inférieure 12 porte également une roue de secours dans un bac 36 prévu à cet effet. D'autres éléments fonctionnels, non représentés sur cette figure, tels que le pot d'échappement, la poutre de chocs arrière ou des écrans thermiques peuvent être portés par cette partie 12 du plancher 10. Ainsi, le temps de montage du véhicule sur la chaîne principale est diminué, ces éléments étant montés directement sur le plancher 10.

Dans l'exemple, le plancher arrière 10, notamment la partie inférieure 12, comporte également une partie inférieure 38 de la jupe arrière, située à l'extrémité arrière du véhicule.

Le plancher 10 tel que décrit ci-dessus permet donc d'équiper toutes les versions existantes d'un véhicule avec un châssis commun et un plancher dont seulement une pièce (partie supérieure 14 du plancher 10) est modifiée. Il peut également être à l'origine d'un montage simplifié. Il permet donc d'économiser de nombreux coûts de fabrication.

Il est cependant bien entendu que l'invention n'est pas limitée au mode de réalisation précédemment décrit.

On peut par exemple citer en variante un plancher arrière qui s'étend sur toute la longueur de l'habitacle, l'extrémité avant du plancher arrière se chevauchant avec le tablier avant, séparant l'habitacle du compartiment moteur.

## Revendications

1. Ensemble d'une caisse en blanc (16) de véhicule automobile et d'un plancher arrière, le plancher arrière (10) comportant une extrémité avant (24) dimensionnée pour se fixer à un plancher avant (22) en se chevauchant avec lui sur une plage de chevauchement (28) étroite dans une version longue de la caisse (16) et large dans une version courte de la caisse (16), **caractérisé en ce que** la caisse en blanc est du type constituée d'un bloc avant (17a) et d'un bloc arrière (17b) pouvant se fixer l'un par rapport à l'autre dans au moins deux positions de sorte que la caisse en blanc (16) puisse avoir la version longue et la version courte, le bloc arrière (17b) comprenant au moins une traverse (18), le plancher avant (22) appartenant au bloc avant (17a), le plancher arrière étant apte à être rapporté sur la caisse en blanc, dans le prolongement du plancher avant (22), le plancher arrière (10) comportant au moins un dégagement (20) destiné à accueillir ladite traverse (18).

2. Ensemble selon la revendication 1, dans lequel le plancher arrière est réalisé au moins partiellement en matière plastique.

3. Ensemble selon la revendication 1 ou 2, dans lequel l'extrémité avant (24) du plancher arrière est une planche à talon (24).

4. Ensemble selon la revendication 1 ou 2, dans lequel le plancher arrière (10) s'étend sur toute la longueur de l'habitacle, l'extrémité avant (24) du plancher arrière se chevauchant avec le tablier avant.

5. Ensemble selon l'une des revendications 1 à 4, dans lequel le plancher arrière comporte une partie inférieure (12) comprenant des moyens de fixation au plancher avant (22) et une partie supérieure (14) comprenant le dégagement (20) destiné à accueillir la traverse (18) de la caisse en blanc (20).

6. Ensemble selon la revendication 5, dans lequel les parties inférieures (12) et supérieures (14) du plancher arrière sont espacées d'au moins 2 centimètres.

7. Ensemble selon l'une quelconque des revendications 5 et 6, dans lequel la partie inférieure (12) du plancher arrière porte des éléments fonctionnels du véhicule tels qu'un réservoir à essence (34) ou un pot d'échappement.

8. Ensemble selon l'une quelconque des revendications 5 à 7, dans lequel la partie supérieure (14) du plancher arrière comporte des moyens de fixation d'éléments fonctionnels du véhicule, tels qu'une ceinture de sécurité ou un siège arrière.

9. Ensemble selon l'une quelconque des revendications 5 à 8, dans lequel le plancher arrière comporte une partie inférieure d'une jupe arrière (38) de véhicule automobile.

10. Ensemble selon l'une quelconque des revendications 5 à 9, dans lequel la partie inférieure (12) est conformée pour améliorer la résistance à l'air du véhicule automobile.

11. Ensemble d'une caisse en blanc de véhicule automobile et d'un lot de deux planchers arrières adaptés à deux versions d'un même véhicule, chaque plancher arrière (10) comportant une extrémité avant (24) dimensionnée pour se fixer à un plancher avant (22) en se chevauchant avec lui sur une plage de chevauchement (28) étroite dans une version longue de la caisse (16) et large dans une version courte de la caisse (16), **caractérisé en ce que** la caisse en blanc est du type constituée d'un bloc avant (17a) et d'un bloc arrière (17b) pouvant se fixer l'un par rapport à l'autre dans au moins deux positions de sorte que la caisse en blanc (16) puisse avoir la version longue et la version courte, le bloc arrière (17b) comprenant au moins une traverse (18), le plancher avant (22) appartenant au bloc avant (17a), chaque plancher arrière étant apte à être rapporté sur la caisse en blanc, dans le prolongement du plancher avant (22), chaque plancher arrière (10a, 10b) comportant une partie inférieure (12a, 12b) comprenant des moyens de fixation au plancher avant (22) et une partie supérieure (14a, 14b) comprenant un dégagement (20) destiné à accueillir ladite traverse (18), les parties inférieures (12a, 12b) des deux planchers étant identiques et les deux parties supérieures (14a, 14b) étant différentes.

12. Procédé de montage d'un véhicule automobile, comprenant une caisse en blanc constituée d'un bloc avant (17a) et d'un bloc arrière (17b) pouvant se fixer l'un par rapport à l'autre dans au moins deux positions de sorte que la caisse en blanc (16) puisse avoir une version longue et une version courte, le bloc arrière (17b) comprenant au moins une traverse (18), le bloc avant comprenant un plancher avant (22), le procédé comprenant les étapes suivantes :
- on assemble le bloc avant (17a) et le bloc arrière (17b) de la caisse en blanc, de façon à former la version souhaitée de la caisse en blanc,
- on rapporte sur le bloc arrière (17b), dans le prolongement du plancher avant (22) , un plancher arrière (10), de sorte qu'une extrémité avant (24) du plancher arrière (10) se fixe au plancher avant (22) en se chevauchant avec lui sur une plage de chevauchement donnée, la plage de chevauchement étant étroite dans la version longue de la caisse (16) et large dans la version étroite de la caisse (16), et qu'un dégagement (20) du plancher arrière (10) accueille la traverse (18) de la caisse.

## Claims

1. Assembly of a motor vehicle body-in-white (16) and a rear floor, the rear floor (10) having a front end (24) dimensioned to be fastened to a front floor (22) by overlapping it over an overlap area (28) that is narrow in a long version of the body (16) and wide in a short version of the body (16), the assembly being **characterized in that** the body-in-white is of the type constituted by a front block (17a) and a rear block (17b) suitable for being fastened relative to each other in at least two positions so that the body-in-white (16) can have a long version and a short version, the rear block (17b) including at least one cross-member (18), the front floor (22) belonging to the front block (17a), the rear floor being suitable for being fitted to the body-in-white to extend the front floor (22), the rear floor (10) including at least one setback (20) for receiving said cross-member (18).

2. Assembly according to claim 1, wherein the rear floor is made at least in part out of plastics material.

3. Assembly according to claim 1 or claim 2, wherein the front end (24) of the rear floor is a heel board (24).

4. Assembly according to claim 1 or claim 2, wherein the rear floor (10) extends over the entire length of the passenger compartment, the front end (24) of the rear floor overlapping the front dash panel.

5. Assembly according to any one of claims 1 to 4, wherein the rear floor has a bottom portion (12) including fastener means for fastening to the front floor (22) and a top portion (14) including the setback (20) for receiving the cross-member (18) of the body-in-white (20).

6. Assembly according to claim 5, wherein the bottom (12) and top (14) portions of the rear floor are spaced apart by at least two centimeters.

7. Assembly according to claim 5 or claim 6, wherein the bottom portion (12) of the rear floor carries functional elements of the vehicle such as a fuel tank (34) or an exhaust silencer.

8. Assembly according to any one of claims 5 to 7, wherein the top portion (14) of the rear floor includes fastener means for fastening the top portion (14) to functional elements of the vehicle, such as a safety belt or a rear seat.

9. Assembly according to any one of claims 5 to 8, wherein the rear floor includes a bottom portion of a rear skirt (38) of the motor vehicle.

10. Assembly according to any one of claims 5 to 9, wherein the bottom portion (12) is shaped to improve the wind resistance of the motor vehicle.

11. Assembly of a motor vehicle body-in-white and a set of two rear floors adapted to two versions of the same vehicle, each rear floor (10) having a front end (24) dimensioned to be fastened to a front floor (22) by overlapping it over an overlap area (28) that is narrow in a long version of the body (16) and wide in a short version of the body (16), the assembly being **characterized in that** the body-in-white is of the type constituted by a front block (17a) and a rear block (17b) suitable for being fastened relative to each other in at least two positions such that the body-in-white (16) can have the long version and the short version, the rear block (17b) including at least one cross-member (18), the front floor (22) forming part of the front block (17a), each rear floor being suitable for being fitted to the body-in-white to extend the front floor (22), each rear floor (10a, 10b) having a bottom portion (12a, 12b) including fastener means for fastening to the front floor (22) and a top portion (14a, 14b) including a setback (20) for receiving said cross-member (18), the bottom portions (12a, 12b) of the two floors being identical and the two top portions (14a, 14b) being different.

12. Method of assembling a motor vehicle, the vehicle having a body-in-white constituted by a front block (17a) and a rear block (17b) capable of being fastened relative to each other in at least two positions such that the body-in-white (16) can have a long version and a short version, the rear block (17b) including at least one cross-member (18), the front block including a front floor (22), the method comprising the following steps:
assembling the front block (17a) with the rear block (17b) of the body-in-white in such a manner as to form the desired version of the body-in-white; and
fitting a rear floor (10) to the rear block (17b) to extend the front floor (22), in such a manner that a front end (24) of the rear floor (10) is fastened to the front floor (22) by overlapping it over a given overlap area, the overlap area being narrow in the long version of the body (16) and wide in the narrow version of the body (16), and that a setback (20) of the rear floor (10) receives the cross-member (18) of the body.

## Patentansprüche

1. Gesamtheit aus einer Rohkarosserie (16) eines Kraftfahrzeugs und einem hinteren Boden, wobei der hintere Boden (10) ein vorderes Ende (24) mit Abmessungen zum Befestigen an einem vorderen Boden (22) durch Überlappen mit diesem in einem in einer langen Ausführung der Karosserie (16) schmalen und in einer kurzen Ausführung der Karosserie (16) breiten Überlappungsbereich (28) umfasst, **dadurch gekennzeichnet, dass** die Rohkarosserie so geartet ist, dass sie aus einem vorderen Block (17a) und einem hinteren Block (17b) besteht, wobei der eine zum anderen in wenigstens zwei Stellungen befestigt werden kann, so dass die Rohkarosserie (16) die lange Ausführung und die kurze Ausführung aufweisen kann, wobei der hintere Block (17b) wenigstens einen Querträger (18) umfasst, der vordere Boden (22) zum vorderen Block (17a) gehört, der hintere Boden zur Rohkarosserie in Verlängerung des vorderen Bodens (22) ausgerichtet werden kann, wobei der hintere Boden (10) wenigstens eine Aussparung (20) zum Aufnehmen des Querträgers (18) umfasst.

2. Gesamtheit nach Anspruch 1, wobei der hintere Boden wenigstens teilweise aus Kunststoff besteht.

3. Gesamtheit nach Anspruch 1 oder 2, wobei das vordere Ende (24) des hinteren Bodens eine Auflagebrücke (24) ist.

4. Gesamtheit nach Anspruch 1 oder 2, wobei sich der hintere Boden (10) über die gesamte Länge des Fahrgastraums erstreckt, wobei das vordere Ende (24) des hinteren Bodens mit der vorderen Schürze überlappt.

5. Gesamtheit nach einem der Ansprüche 1 bis 4, wobei der hintere Boden einen unteren Teil (12) umfassend Mittel zur Befestigung am vorderen Boden (22) und einen oberen Teil (14) umfassend die Aussparung (20) zum Aufnehmen des Querträgers (18) der Rohkarosserie (20) umfasst.

6. Gesamtheit nach Anspruch 5, wobei der untere (12) und obere Teil (14) des hinteren Bodens wenigstens 2 Zentimeter voneinander entfernt sind.

7. Gesamtheit nach einem der Ansprüche 5 und 6, wobei der untere Teil (12) des hinteren Bodens funktionale Elemente des Fahrzeugs wie einen Kraftstofftank (34) oder einen Auspufftopf trägt.

8. Gesamtheit nach einem der Ansprüche 5 bis 7, wobei der obere Teil (14) des hinteren Bodens Mittel zur Befestigung von funktionalen Elementen des Fahrzeugs wie einen Sicherheitsgurt oder einen Rücksitz umfasst.

9. Gesamtheit nach einem der Ansprüche 5 bis 8, wobei der hintere Boden einen unteren Teil einer Heckschürze (38) eines Kraftfahrzeugs umfasst.

10. Gesamtheit nach einem der Ansprüche 5 bis 9, wobei der untere Teil (12) so gestaltet ist, dass der Luftwiderstand des Kraftfahrzeugs optimiert wird.

11. Gesamtheit aus einer Rohkarosserie eines Kraftfahrzeugs und einem Satz aus zwei hinteren Böden, angepasst an zwei Ausführungen eines Fahrzeugs, wobei jeder hintere Boden (10) ein vorderes Ende (24) mit Abmessungen zum Befestigen an einem vorderen Boden (22) durch Überlappen mit diesem in einem in einer langen Ausführung der Karosserie (16) schmalen und in einer kurzen Ausführung der Karosserie (16) breiten Überlappungsbereich (28) umfasst, **dadurch gekennzeichnet, dass** die Rohkarosserie so geartet ist, dass sie aus einem vorderen Block (17a) und einem hinteren Block (17b) besteht, wobei der eine zum anderen in wenigstens zwei Stellungen befestigt werden kann, so dass die Rohkarosserie (16) die lange Ausführung und die kurze Ausführung aufweisen kann, wobei der hintere Block (17b) wenigstens einen Querträger (18) umfasst, der vordere Boden (22) zum vorderen Block (17a) gehört, jeder hintere Boden zur Rohkarosserie in Verlängerung des vorderen Bodens (22) ausgerichtet werden kann, wobei jeder hintere Boden (10a, 10b) einen unteren Teil (12a, 12b) umfassend Mittel zur Befestigung am vorderen Boden (22) und einen oberen Teil (14a, 14b) umfassend eine Aussparung (20) zum Aufnehmen des Querträgers (18) umfasst, wobei die unteren Teile (12a, 12b) der beiden Böden identisch sind und die beiden oberen Teile (14a, 14b) verschieden sind.

12. Verfahren zur Montage eines Kraftfahrzeugs, umfassend eine Rohkarosserie bestehend aus einem vorderen Block (17a) und einem hinteren Block (17b), wobei der eine zum anderen in wenigstens zwei Stellungen befestigt werden kann, so dass die Rohkarosserie (16) eine lange Ausführung und eine kurze Ausführung aufweisen kann, wobei der hintere Block (17b) wenigstens einen Querträger (18) umfasst und der vordere Block einen vorderen Boden (22) umfasst, wobei das Verfahren folgende Schritte umfasst:
- der vordere Block (17a) und der hintere Block (17b) der Rohkarosserie werden montiert, um die gewünschte Ausführung der Rohkarosserie zu bilden.
- zum hinteren Block (17b) wird in Verlängerung des vorderen Bodens (22) ein hinterer Boden (10) ausgerichtet, so dass ein vorderes Ende (24) des hinteren Bodens (10) am vorderen Boden (22) durch Überlappen mit diesem in einem definierten Überlappungsbereich befestigt wird, wobei der Überlappungsbereich in der langen Ausführung der Karosserie (16) schmal und in der schmalen Ausführung der Karosserie (16) breit ist, und eine Aussparung (20) des hinteren Bodens (10) den Querträger (18) der Karosserie aufnimmt.
